# EUROPÄISCHE PATENTSCHRIFT

(11) **EP 1 011 844 B1**
(45) Veröffentlichungstag und Bekanntmachung des Hinweises auf die Patenterteilung: **17.03.2004**
(21) Anmeldenummer: 98943657.1
(22) Anmeldetag: 09.07.1998
(51) Int. Cl.: B01D 53/26, B01D 53/22

(54) **ANORDNUNG ZUR ENTFERNUNG VON WASSERDAMPF AUS UNTER DRUCK BEFINDLICHEN KOHLENWASSERSTOFF ENTHALTENDEN GASEN ODER GASGEMISCHEN**
DEVICE FOR REMOVING WATER VAPOUR FROM PRESSURISED HYDROCARBON CONTAINING GASES OR GAS MIXTURES
DISPOSITIF PERMETTANT DE SUPPRIMER LA VAPEUR D'EAU CONTENUE DANS DES GAZ OU DES MELANGES GAZEUX CONTENANT DES HYDROCARBURES SOUS PRESSION

(30) Priorität: 06.09.1997 DE 19739144
(43) Veröffentlichungstag der Anmeldung: 28.06.2000
(73) Patentinhaber: GKSS-Forschungszentrum Geesthacht GmbH, 21502 Geesthacht (DE)
(72) Erfinder: OHLROGGE, Klaus, D-21502 Geesthacht (DE); NITSCHE, Volker, D-21073 Hamburg (DE); WIND, Jan, D-21481 Lauenburg (DE)
(74) Vertreter: Niedmers, Ole, Dipl.-Phys.
(86) Internationale Anmeldenummer: PCT/DE1998/001891
(87) Internationale Veröffentlichungsnummer: WO 1999/012636

(56) Entgegenhaltungen:
- EP-A- 0 329 962
- EP-A- 0 511 687
- EP-A- 0 512 474
- EP-A- 0 547 387
- EP-A- 0 702 995
- EP-A- 0 752 265
- DE-A- 2 047 359
- DE-C- 19 603 420

## Beschreibung

Die Erfindung betrifft eine Anordnung zur Entfernung von Wasserdampf aus unter Druck befindlichen, Kohlenwasserstoff enthaltenden Gasen oder Gasgemischen.

Eine Anordnung zur Entfernung von Wasserdampf, die eine Membrantrenneinheit verwendet, ist bekannt (EP-A-0 752 265). Die in diesem Dokument beschriebene Vorrichtung berücksichtigt nicht, daß maßgebend für eine Retentatreinheit bei einer gegebenen Membranfläche neben dem Betriebsdruck das Druckverhältnis ist, aus dem das Verhältnis von Rohgasvolumenstrom, d.h. dem zugeführten Gas-Dampf-Gemisch, zu Permeatvolumenstrom (Stufenschnitt) resultiert.

Die Entfernung von Wasserdampf aus Gasströmen ist in vielen technischen Bereichen eine vielfach gebotene Notwendigkeit. Wird beispielsweise Druckluft als Energieträger eingesetzt, so ist insbesondere dabei die Entfernung von Wasserdampf aus der Druckluft nahezu zwingend. Die Einsatzbereiche liegen z.B. in der Nutzung der Druckluft zum Betrieb von Druckluftwerkzeugen, als Steuerluft zur Prozeßregelung, als Instrumentenluft und zum Betrieb pneumatischer Fördereinrichtungen für Schüttgüter. Da die Druckluft am Austritt eines Kompressors zwangsläufig wasserdampfgesättigt vorliegt, führt bereits eine minimale Temperaturabsenkung zur Wasserdampfkondensation. Kondensat- oder gar Eisbildung in einem Druckauftleitungsnetz würde die Funktion die vorerwähnten Drucklufverbraucher stark einschränken bzw. völlig unmöglich machen. Aus diesem Grunde muß der Wasserdampfgehalt des den Kompressor verlassenden Druckluftstromes durch Einschaltung eines geeigneten Trocknungsverfahrens reduziert werden. Der einzustellende Drucktaupunkt und damit auch der Trennaufwand hängen von den speziellen Anforderungen der jeweiligen Druckluftanwender ab.

Bisher werden zur Druckluftentfeuchtung, vielfach wird auch von der "Trocknung" von Druckluft gesprochen, im wesentlichen Kühl- und Adsorptionverfahren eingesetzt. In 90 % aller Anwendungsfälle werden Kälte-Drucklufttrockner verwendet. Bei diesem Trocknungsverfahren wird die mit hoher Temperatur aus dem Kompressor austretende Luft zunächst in einem Luft/Luft-Wärmeaustauscher im Gegenstrom zu der getrockneten Druckluft abgekühlt, wobei bereits ein erster Kondensatanfall zu verzeichnen ist. Die endgültige Einstellung des gewünschten Drucktaupunktes erfolgt anschließend in einem Kältemittel-Luft-Wärmeaustauscher, in welchem die zur Verdampfung des Kältemittels erforderliche Enthalpie dem Druckluftstrom entzogen wird, wodurch dieser entsprechend abgekühlt wird. Die an den kalten Wandungen des Wärmeübertragers verflüssigten Wassermoleküle gelangen in einen Kondensatableiter und werden dort in gewissen Zeitintervallen automatisch abgeführt.

Die Trocknung durch Adsorption ist ebenfalls ein rein physikalischer Vorgang, bei dem feuchte Druckluft durch einen mit geeigneten Adsorbentien gefüllten Behälter strömt. Die starke Wechselwirkung der in der Luft enthaltenen Wasserdampfmoleküle mit den festen, porösen Adsorbentien großer innerer Oberfläche ermöglichen eine selektive Abtrennung des Wasserdampfes. Geeignete Adsorbentien zur Drucklufttrocknung sind beispielsweise Kieselgele, aktivierte Tonerden oder Zeolithe. Das Adsorptionsverfahren verläuft prinzipiell diskontinuierlich, weil die Adsorbentien nur eine gewisse Aufnahmekapazität für das Adsorbat (Wasserdampf) haben und somit in festzulegenden Zeitabschnitten regeneriert sein müssen. Es sind somit mindestens zwei Adsorber notwendig, die wechselseitig betrieben und regeneriert werden. Die Desorption der Wassermoleküle an den beladenen Adsorberbetten erfolgt entweder durch Kalt- oder Warmregeneration.

Obwohl das oben erwähnte Kühlverfahren grundsätzlich den direktesten Weg, einen definierten Taupunkt eines Gas-Dampf-Gemisches einzustellen, darstellt, ist die Anwendung einer derartigen Methode auf die Trocknung von Druckluftströmen aus energetischer Sicht mit erheblichen Nachteilen verbunden. Dieses soll anhand eines Beispieles dargelegt werden. Es sei angenommen, daß ein aus einem Kompressor austretender Druckluftstrom in jedem Falle, d.h. auch bei anderen Methoden zur Entfeuchtung von Druckluft, zunächst vorgekühlt werden muß. Dabei soll beispielsweise ein bei 35° C und 8 bar Absolutdruck wasserdampfgesättigter Druckluftstrom von Wasserdampf befreit, d.h. getrocknet werden. Bei diesem thermodynamischen Zustand der Druckluft beim Eintritt in einen Kältemittel/Luft-Wärmeaustauscher beträgt der Volumenanteil der kondensierbaren Komponente Wasserdampf lediglich 0,7 %. Das bedeutet jedoch, daß 99,3 Vol% des Druckluftstromes auf die erforderliche tiefe Temperatur abgekühlt werden muß, ohne daß für diesen Hauptanteil des Gasstromes ein Nutzen daraus entstünde. Da aus Gründen der Korrosionsvermeidung die relative Feuchte stets kleiner als 60 % betragen soll, ist vielmehr eine erneute Aufheizung des kalten, um den Kondensat verminderten Gas-Dampf-Gemisches erforderlich. Grundsätzlich sind Kältetrockner nur zur Einstellung von Drucktaupunkten von minimal +2° C geeignet. Bei tieferen Kältemittelverdampfungstemperaturen ist auf der Druckluftseite mit Eisbildung auf den Wärmeaustauschflächen zu rechnen. Da Eis einen äußerst geringen Wärmeleitkoeffizienten aufweist, würde die damit verbundene Isolationswirkung der Eisschicht die Wärmeübertragungsleistung deutlich herabsetzen; der gewünschte Drucktaupunkt auf der Luftseite des Wärmeübertragers würde dann selbst bei dünnen Eisbelägen nicht mehr erreicht. Zudem würde durch die Verengung des Strömungsquerschnittes der Druckverlust im Wärmeübertrager ansteigen. Weiterhin führt das prinzipbedingte Anfallen von Kondensat in den indirekten Wärmeübertragern der Druckluftkältetrockner häufig zu Problemen. Bei der Kondensatableitung kommt es oftmals zu Funktionsstörungen, was wiederum einen hohen Wartungsbedarf bedingt. Zudem sind die Kondensatableiter vielfach mit Magnetventilen ausgerüstet, was wiederum mit relativ hohen Druckluftverlusten während der Kondensatausschleusung verbunden ist. Zusammenfassend kann gesagt werden, daß die Installation größerer Kältetrockner sehr aufwendig ist und der Betrieb mit hohem Wartungsaufwand verbunden ist. Hinzukommt, daß bei deren Betrieb eine beträchtliche Geräuschentwicklung zu verzeichnen ist, so daß wiederum zusätzliche Investitionen zur Minderung der Lärmemissionen erforderlich sind.

Die oben erwähnten Adsorptionsverfahren zur Druckluftentfeuchtung kommen dann zum Einsatz, wenn Drucktaupunkte unterhalb von 0° C erforderlich sind, weil aus den bereits genannten Gründen die vorerwähnten Kältetrockner sinnvollerweise nicht mehr eingesetzt werden können. Die Hauptnachteile der Adsorptionstrockner liegen in dem grundsätzlich diskontinuierlichen Betrieb begründet. Sowohl bei kalt- als auch bei warmregenerierten Adsorbern ist ein Spülluftstrom zum Austrag der zuvor adsorptiv gebundenen Feuchte erforderlich. Da der Spülgasstrom hinreichend trocken sein muß, wird hierzu ein gewisser Anteil des getrockneten Druckluftstroms verwendet. Dieser zuvor aufwendig aufbereitete Teilstrom steht dem Druckluftanwender demnach nicht mehr zur Verfügung und geht verloren. Je nach Anwendungsfall und Regenerationsmodus kann dieser Verluststrom bis zu 15 % des getrockneten Druckluftstromes ausmachen. Während die Adsorption unter dem vom Kompressor erzeugten Druck verläuft, ist für die Desorption die Entspannung auf Atmosphärendruck erforderlich. Zu dem zyklisch vorgenommenen Druckwechsel wird das Trockenmittel stark belastet. Die Auswirkungen sind mit der Zeit absinkende Gleichgewichtsbeladungen bzw. Aufnahmekapazitäten der Adsorptionsmittel. Bei Aktivtonerde sinkt die Kapazität beispielsweise um 30 bis 40 % bei 150° C nach 500 Zyklen. In gewisser Weise ist die Adsorption ein selbsthemmendes Verfahren, da mit der Adsorption der Wassermoleküle auch das Freiwerden von Adsorptionswärme verbunden ist, die wiederum zu einem Temperaturanstieg im Adsorberbett führt und damit das Adsorptionsgleichgewicht hinsichtlich einer deutlich schlechteren Wasseraufnahme verschiebt.

Es ist somit Aufgabe der vorliegenden Erfindung, eine Vorrichtung zur Entfernung von Wasserdampf aus unter hohem Druck befindlichen Gasen oder Gasgemischen der eingangs genannten Art zu schaffen, mit der die voraufgeführten Nachteile der bisherigen bekannten, dafür verwendeten Vorrichtungen bzw. Verfahren vermieden werden, mit dessen Hilfe die Entfernung von Wasserdampf aus kleineren, mittleren und großen Gas- bzw. Gasgemischströmen auf einfache Weise ohne hohen Aufwand möglich ist, wobei die Vorrichtung einfach im Aufbau und somit kostengünstig bereitstellbar und auch einfach und somit kostengünstig betreibbar ist und der bisherige Wartungsaufwand und Betriebsaufwand, wie er bei bisherigen Vorrichtungen bzw. Verfahren dieser Art nötig war, sehr stark vermindert wird.

Gelöst wird die Aufgabe gemäß der Erfindung durch eine Anordnung zur Entfernung von Wasserdampf aus unter Druck befindlichen, Kohlenwasserstoff enthaltenden Gasen oder Gasgemischen, wobei das unter Druck befindliche Gas oder Gas-Dampf-Gemisch eingangsseitig auf eine Membrantrenneinrichtung geleitet wird, in der es retentatseitig in einen dampabgereichterten Gasstrom und permeatseitig in einen dampfangereichterten Gasstrom getrennt wird, und daß permeatseitig mittels einer Pumpeneinrichtung ein Vakuum erzeugbar ist, und wobei die in der Membrantrenneinrichtung verwendeten Membranen eine Selektivität α im Bereich 100 bis 10.000 aufweisen.

Der Vorteil der erfindungsgemäßen Vorrichtung liegt im wesentlichen darin, daß die Anordnung sich durch einen einfachen Aufbau, wie angestrebt, auszeichnet und durch eine hohe Effizienz bei sehr stark reduzierten Gestehungs- und Wartungskosten. Alle Nachteile der bekannten Anlagen bzw. bekannten Verfahren zur Entfernung von Wasserdampf aus unter hohem Druck befindlichen Gasen oder Gasgemischen werden durch die erfindungsgemäß vorgeschlagene Lösung vermieden, d.h. es ist weder mit Eisbildung auf Wärmeaustauscherflächen zu rechnen (wie beim bekannten Kühlverfahren) noch mit den Nachteilen eines diskontinuierlichen Betriebes (wie bei den Adsorptionsverfahren). Die bei der erfindungsgemäßen Vorrichtung verwendeten bzw. verwendbaren Vorrichtungskomponenten sind als solche für sich bekannt und in der einschlägigen Technik eingeführt. Das hat wiederum den Vorteil, daß die erfindungsgemäß vorgeschlagene Vorrichtung auf einfache Weise kostengünstig bereitgestellt werden kann und somit auch die Instandhaltungskosten und Wartungskosten niedrig gehalten werden können.

Die in der Membrantrenneinrichtung verwendeten Membranen werden derart ausgewählt, daß sie eine große Selektivität α aufweisen (α = Verhältnis Wasserdampf- permeabilität zu Trägergaspermeabilität), wobei durch gezielte Maßnahmen beim Herstellungsprozeß der vorbezeichneten Membran die Selektivität α dieser Membran beim konstantem Wasserfluß in weiten Bereichen variiert werden kann. Die genannte Membran hat keine Selektivität zwischen den Trägergasanteilen, beispielsweise Sauerstoff und Stickstoff, wobei die Selektivität α derart gewählt wird, daß sie im Bereich von 1000 bis 10.000 liegt.

Bei einer vorteilhaften Ausgestaltung der Anordnung ist die Membrantrenneiririchtung im Kreuzstrommodus oder Gegenstrommodus ohne externes Spülgas betreibbar.

Vorzugsweise sind die in der Membrantrenneinrichtung verwendbaren Membranen Membranen auf Celluloseether-Basis ausgebildet, wie sie beispielsweise in der deutschen Patentanmeldung 196 03 420.5-44 (Kompositmembran aus einer insbesondere mikroporösen Trägermembran) beschrieben worden ist. Diese Membran weist eine hohe Wasserdampfpermeabilität L_{w} bis zu 50 m³ (i.N.)/m² h bar) auf.

Der Einsatz einer hochselektiven Membran ist aber regelmäßig nur dann sinnvoll, wenn gleichzeitig ein entsprechend hohes Druckverhältnis zur Verfügung gestellt wird. Um eine Anpassung des Druckverhältnisses an eine hohe Membranselektivität zu erreichen, ist die permeatseitig angeordnete Pumpeneinrichtung in Form einer Flüssigkeitsring-Vakuumpumpe ausgebildet. Diese wird mit Wasser als Ringflüssigkeit betrieben. Durch die sowohl mit der Selektivität als auch dem höheren Druckverhältnis ansteigende Wasserdampfkonzentration im Permeat können mit der Flüssigkeitsring-Vakuumpumpe deutlich höhere Ansaugvolumina erreicht werden. Dieses hat seinen Grund darin, daß der im Permeat erhaltene Wasserdampf im Flüssigkeitsring auf dem Weg von der Saugzur Druckseite der Pumpe auskondensiert und durch die damit verbundene Dichteänderung ein gewisses Freivolumen geschaffen wird.

Als vorteilhafte alternative Ausgestaltung der Vorrichtung ist es auch möglich, die Pumpeneinrichtung durch einen Dampfstrahler auszubilden, insbesondere wenn niedrige Permeatdrücke eingestellt werden sollen (< 40 mbar). Es ist aber vorteilhafterweise auch möglich, die Pumpeneinrichtung durch eine Kombination aus einer Flüssigkeitsring-Vakuumpumpe und einem Dampfstrahler auszubilden.

Bei einer weiteren vorteilhaften Ausführungsform der Vorrichtung ist diese derart ausgestaltet, daß ein hohes transmembranes Druckverhältnis φ durch geeignete Wahl der Pumpeneinrichtung einstellbar ist. Das zur Trennung von Gasgemischen mit Hilfe porenfreier Membranen erforderliche transmembrane Druckverhältnis φ (φ = Verhältnis der Systemdrücke auf der Hoch- und Niederdruckseite der Membran, vereinfacht meist definiert als Verhältnis Feeddruck zu Permeatdruck) ist bei der Anwendung auf die Drucklufttrocknung zwar vielfach schon vorhanden, weil der Feeddruck durch einen Kompressor bereitgestellt wird, läßt man jedoch den Permeatstrom gegen den Atmosphärendruck abströmen, so wäre dieses Druckverhältnis stets kleiner als 10 und die erforderlichen Drucktaupunkte ließen sich auf diese Weise nicht einstellen. Der Einsatz der schon erwähnten hochselektiven Membran ist nur dann sinnvoll, wenn gleichzeitig, wie schon erwähnt, ein hohes Druckverhältnis zur Verfügung gestellt wird. Durch ein Vakuum von beispielsweise 50 mbar auf der Permeatseite kann das Druckverhältnis, ausgehend von einem Verdichtungsdruck von 8 bar von φ = 8, um den Faktor 20 auf φ = 160 erhöht werden.

Bei einer noch anderen vorteilhaften Ausgestaltung der Anordnung ist der Pumpeneinrichtung nachgeschaltet ein Wasserabscheider angeordnet, wobei die aus dem Wasserabscheider austretende Betriebsflüssigkeit vorteilhafterweise als Kühlflüssigkeit verwendet werden kann, und zwar bei einer weiteren vorteilhaften Ausgestaltung der Anordnung, bei der das zu trennende Gas-Dampf-Gemisch vor Eintritt in die Membrantrenneinrichtung über eine Kühleinrichtung führbar ist und diese Kühleinrichtung mit der Betriebsflüssigkeit des Wasserabscheiders kühlbar ist.

Weiterhin ist es vorteilhafterweise möglich, die Anordnung weiterhin derart auszugestalten, daß das die Kühleinrichtung verlassende Wasser als Betriebsflüssigkeit der als Flüssigkeitsring-Vakuumpumpe ausgebildeten Pumpeneinrichtung zuführbar ist oder aber vorteilhafterweise so zu gestalten, daß das die Kühleinrichtung verlassende Wasser, bevor es als Betriebsflüssigkeit der als Flüssigkeitsring-Vakuumpumpe ausgebildeten Pumpeneinrichtung zuführbar ist, zu seiner Kühlung über eine Kühleinrichtung führbar ist. Das aus dem Wasserabscheider austretende Wasser bzw. die dort austretende Kühlflüssigkeit ist wegen des bei Flüssigkeitsring-Vakuum-Pumpen nahezu realisierten Prinzips der isothermen Verdichtung nur geringfügig erwärmt, so daß es, wie vorangehend beschrieben, noch als Kühlflüssigkeit sinnvoll genutzt werden kann.

Die Erfindung wird nun unter Bezugnahme auf die anliegenden Zeichnungen anhand eines Ausführungsbeispieles sowie zweier Modifikationen einer Grundversion der Erfindung eingehend beschrieben. Darin zeigen
- Fig. 1: den grundsätzlichen Aufbau der erfindungsgemäßen Anordnung im Blockschaltbild,
- Fig. 2: den Aufbau einer Anordnung gemäß Fig. 1, bei der jedoch die in einem Wasserabscheider anfallende Betriebsflüssigkeit als Kühlflüssigkeit benutzt einer Flüssigkeitsring-Vakuumpumpe erneut unter Zugabe eines Anteils frischer Betriebsflüssigkeit als Pumpenflüssigkeit zugeführt werden kann, und
- Fig. 3: eine Ausgestaltung der Anordnung gemäß Fig. 2, bei der die zur Flüssigkeitsring-Vakuumpumpe zurückgeführte Ringflüssigkeit zuvor über eine Kühleinrichtung geführt wird.

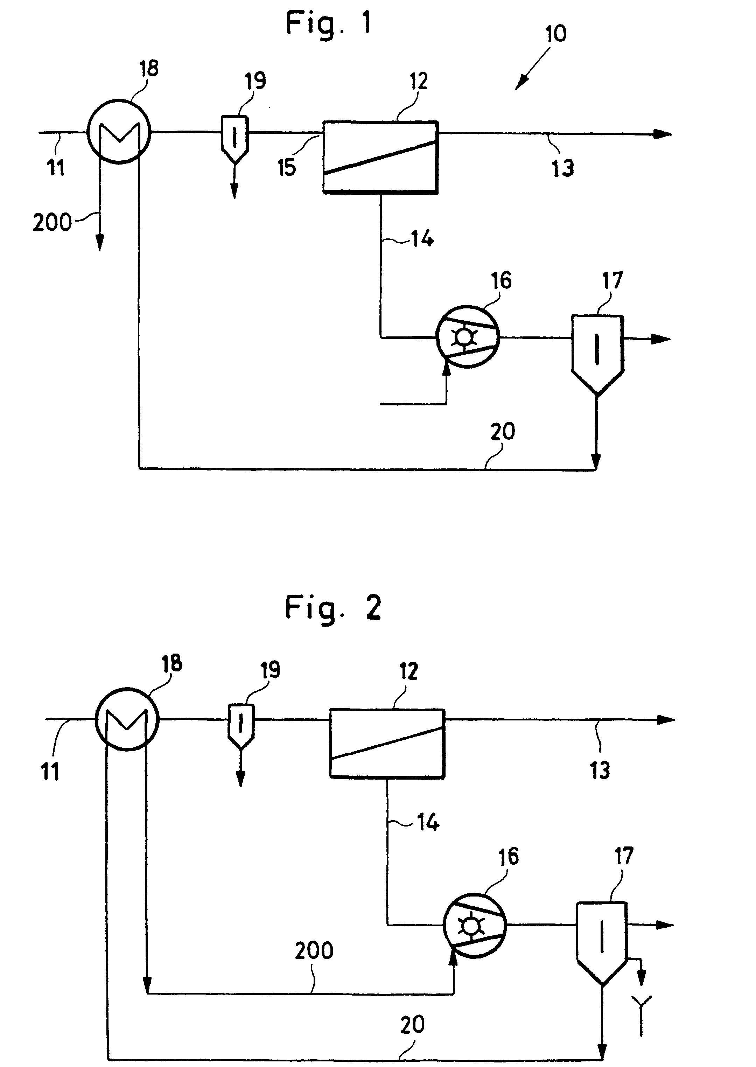

Die in Fig. 1 dargestellte Anordnung 10 stellt den Grundaufbau der Anordnung zur Entfernung von Wasserdampf aus unter hohem Druck befindlichen Gasen oder Gasgemischen dar. Es wird zunächst bezüglich des Aufbaus und der Funktion der Anordnung 10 auf Fig. 1 Bezug genommen.

Das unter Druck befindliche Gas-Dampf-Gemisch 11, auch Feedstrom genannt, wird auf eine Kühleinrichtung 18 gegeben, in der es auf vorbestimmbare Weise gekühlt wird. Von dort gelangt das weiterhin unter Druck befindliche Gas-Dampf-Gemisch 11 auf einen Abscheider 19, in dem im Gas-Dampf-Gemisch 11 enthaltene Fremdstoffe wie Öl und dergleichen abgeschieden werden. Von dort gelangt das unter Druck befindliche Gas-Dampf-Gemisch 11 auf den Eingang 15 einer Membrantrenneinrichtung 12. In der Membrantrenneinrichtung 12 wird das Gas-Dampf-Gemisch 11 in einen dampfangereicherten Gasstrom 14 (Permeat) und einen dampfabgereicherten Gasstrom 13 (Retentat) getrennt. Der dampfabgereicherte Gasstrom 13 stellt den Teilstrom dar, der bestimmungsgemäß von Wasserdampf befreit ist, beispielsweise "getrocknete" Druckluft.

Der notwendige permeatseitige Unterdruck an der Permeatseite der Membrantrenneinrichtung 12 wird durch eine Pumpeneinrichtung 16 erzeugt, die mit dem permeatseitigen Ausgang der Membrantrenneinrichtung 12 verbunden ist. Die Pumpeneinrichtung 16 kann beispielsweise eine Flüssigkeitsring-Vakuumpumpe sein oder auch ein sogenannter Dampfstrahler, es ist aber auch möglich, die Pumpeneinrichtung 16 aus einer Kombination aus einem Dampfstrahler und einer Flüssigkeitsring-Vakuumpumpe auszubilden. Insofern steht die Pumpeneinrichtung 16 hier nur stellvertretend für bestimmte geeignete Pumpen, die für die bestimmungsgemäße Funktion der Anordnung anwendbar sind. Aus der Pumpeneinrichtung 16 tritt, wie erwähnt, der dampfangereicherte Gasstrom 14 aus und wird über einen Wasserabscheider 17 geleitet. Aus dem Wasserabscheider tritt der dampfangereicherte Gasstrom 14 um den im Abscheidungsprozeß verminderten Wasseranteil aus und kann in die Atmosphäre gegeben werden. Die Abgabe an die Atmosphäre ist völlig unproblematisch, da es sich bei dem dampfabgereicherten Gasstrom weder um ein Wertprodukt noch um einen umweltgefährdenden Stoff handelt.

Da die Anordnung 10 aber grundsätzlich auch zur Erdgastrocknung geeignet ist, kann für diesen Fall das Permeat, d.h. der dampfangereicherte Gasstrom 14, noch nennenswerte Anteile an Kohlenwasserstoffen enthalten, vorwiegend Methan, die aus ökologischen und ökonomischen Gründen einer weiteren Behandlung zu unterziehen sind. Die Anordnung 10 müßte dann um einen bzw. mehrere Aufbereitungsschritte, die hier nicht gesondert dargestellt sind, erweitert werden.

Das im Wasserabscheider 17 anfallende Wasser 20 kann als Kühlmittel auf die Kühleinrichtung 18 gegeben werden und durchläuft dort als Kühlmittel für das zu trennende Gas-Dampf-Gemisch 11 die Kühleinrichtung 18 und verläßt diese nach dem Wärmeaustausch als Wasser 200.

Die Anordnung gemäß Fig. 2 unterscheidet sich von der Anordnung gemäß Fig. 1 lediglich dadurch, daß das die Kühleinrichtung 18 verlassende Wasser 200 wiederum zurückgeführt wird und auf die in Form einer Flüssigkeitsring-Vakuumpumpe ausgebildeten Pumpeneinrichtung 16 gegeben wird, in der das Wasser 200 als Ringflüssigkeit benutzt wird. Bei dieser Ausgestaltung wird somit das im Prozeß der Anordnung 10 abgeschiedene Wasser nach Art eines Kreislaufs sowohl für Kühlungszwecke als auch als Betriebsflüssigkeit für die Flüssigkeits-Ring-Vakuumpumpe benutzt. Um eine zunehmende Erwärmung der Betriebsflüssigkeit der Pumpeneinrichtung 16 zu verhindern, wird ein Teil der Betriebsflüssigkeit nach dem Wasserabscheider 17 abgeführt. Eine entsprechende Menge frische/kalte Flüssigkeit wird in den Kühlkreislauf vor Eintritt in die Pumpeneinrichtung 16 zugegeben.

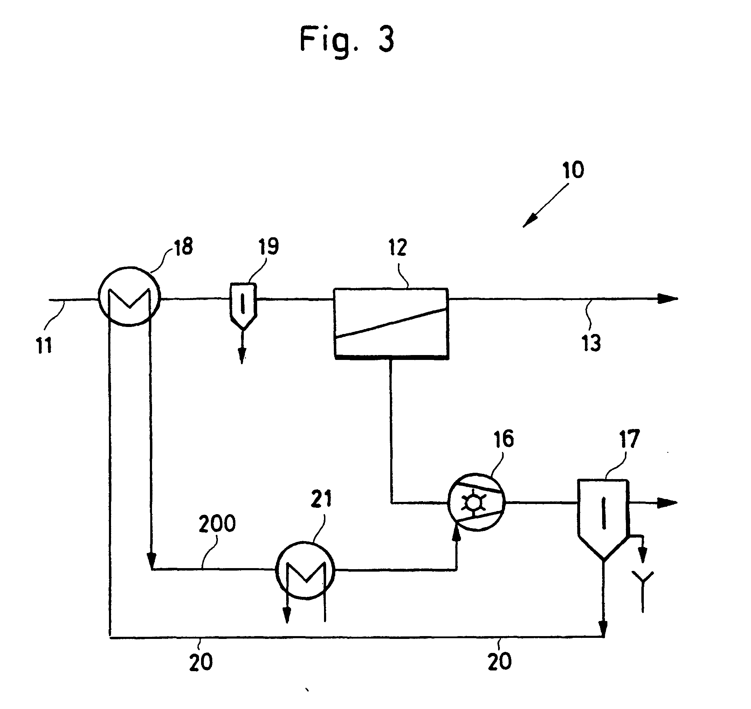

Die Anordnung 10 gemäß Fig. 3 unterscheidet sich von der Anordnung 10 gemäß Fig. 2 lediglich dadurch, daß das von der Kühleinrichtung 18 zurückkommende Wasser 200 vor dem Eintritt als Betriebsflüssigkeit in die als Flüssigkeitsring-Vakuumpumpe ausgebildete Pumpeneinrichtung 16 eintritt und über eine zwischengeschaltete Kühleinrichtung 21 geleitet wird.

Von großer Bedeutung für den Aufbau und die Funktion der Anordnung 10 ist die Auswahl der eigentlichen Membran in der Membrantrenneinrichtung 12. Dabei spielt insbesondere die Selektivität α der Membran eine Rolle.

Durch gezielte Maßnahmen beim Herstellungsprozeß der Membran kann die Selektivität α bei konstantem Wasserfluß in weiten Bereichen variiert werden. Die gesamte Membran hat keine Selektivität zwischen den Trägergasanteilen Sauerstoff und Stickstoff. Unter der gegebenen Zielsetzung der Abtrennung einer besser permeierenden dampfförmigen Minderkomponente, beispielsweise Wasserdampf, zur Taupunktabsenkung des auf der Hochdruckseite der Membran verbleibenden Gas-Dampf-Gemisches 11 ist eine Erhöhung der Selektivität durch Reduzierung des Flusses der schlechter permeierenden Hauptkomponente, beispielsweise Luft, zunächst von Nachteil. Die Einstellung eines bestimmten Drucktaupunktes erfordert in diesem Fall größere Membranflächen beim Einsatz von Membranen, deren Selektivität durch Flußreduzierung der ohnehin schlechter permeierenden Komponente erhöht wurde. Die höhere Selektivität bewirkt andererseits einen deutlich geringeren Stufenschnitt θ (θ = Verhältnis Permeatstrom zu Feedstrom) und eine höhere Wasserdampfkonzentration im angereicherten Permeatstrom. Die Druckluftverluste werden also trotz größerer Membranfläche herabgesetzt. Das zur Trennung von Gasgemischen mit Hilfe porenfreier Membranen erforderliche transmembrane Druckverhältnis φ ( φ= Verhältnis der Systemdrücke auf der Hoch- und Niederdruckseite der Membran, vereinfacht meistens definiert als Verhältnis Feeddruck zu Permeatdruck) ist bei der Anwendung auf Drucklufttrocknung prinzipiell vorhanden, weil der Feeddruck, d.h. der Druck des Gas-Dampf-Gemisches 11, regelmäßig durch einen Kompressor bereitgestellt wird. Läßt man den Permeatstrom jedoch gegen den Atmosphärenstrom abströmen, so wäre das Verhältnis stets kleiner als 10. Die erforderlichen Drucktaupunkte ließen sich auf diese Weise nicht erreichen.

Der Einsatz einer hochselektiven Membran ist nur dann sinnvoll, wenn gleichzeitig ein entsprechend hohes Druckverhältnis zur Verfügung gestellt wird. Im Rahmen dieser Erfindung wurde das Druckverhältnis an die hohe Membranselektivität angepaßt, indem permeatseitig die Installation der besagten Flüssigkeitsring-Vakuumpumpe 16 erfolgt, die mit Wasser 200 als Ringflüssigkeit betrieben wird. Durch ein Vakuum von beispielsweise 50 mbar auf der Permeatseite kann das Druckverhältnis, ausgehend von einem Verdichtungsdruck von 8 bar von φ = 8, um den Faktor 20 auf φ = 160 erhöht werden. Durch die Kombination einer hochselektiven Membran mit einem hohen Druckverhältnis, welches durch die Flüssigkeitsring-Vakuumpumpe 16 erzeugt wird, wird der oben genannte Nachtteil erhöhten Membranflächenbedarfs bei höheren Membranselektivitäten ausgeschaltet.

Die positiven Auswirkungen des Zusammenwirkens einer hochselektiven Membran einerseits mit einem hohen Druckverhältnis durch permeatseitige Vakuumunterstützung andererseits können der nachfolgenden Tabelle 1 entnommen werden. Der ohnehin mit höheren Selektivitäten zu verzeichnende Vorteil geringer Druckluft- oder Druckgasverluste wird durch die Erhöhung des Druckverhältnisses verstärkt. Aus dieser Konstellation ergibt sich ein weiterer charakteristischer Vorteil der vorgeschlagenen Anordnung 10 und des mit ihr ausführbaren Trocknungsverfahrens. Durch die sowohl mit der Selektivität als auch mit dem höheren Druckverhältnis ansteigende Wasserdampfkonzentration im Permeat können mit der Vakuumpumpe 16 deutlich höhere Ansaugvolumina erreicht werden. Dies liegt darin begründet, daß der im Permeat erhaltene Wasserdampf im Flüssigkeitsring auf dem Weg von der Saug- zur Druckseite der Vakuumpumpe 16 auskondensiert und durch die damit verbundene Dichteänderung ein gewisses Freivolumen geschaffen wird. Unter Beachtung der Mindestgasmenge für einen kavitationsfreien Betrieb der Vakuumpumpe 16 muß deren Auswahl also nicht nach dem gesamten Permeatvolumenstrom erfolgen, sondern nur nach dem geringeren Inertgasanteil des Permeats unter Berücksichtigung des korrespondierenden Phasengleichgewichtes auf der Austrittsseite der Pumpeneinrichtung 16. Kurz ausgedrückt: Mit steigendem Wasserdampfgehalt im Permeat sinkt die für die jeweils zu bewältigende Aufgabe der Anordnung 10 erforderliche Pumpengröße und damit senken sich auch System- und Betriebskosten.

**Tabelle 1:**

| | | | | |
|---|---|---|---|---|
| Einfluß von Membranselektivität und durch Vakuumunterstützung erzeugtes Druckverhältnis auf den Membranflächenbedarf A_{erf}, den Druckluftverlust θ_{Luft} und die Wasserdampfkonzentration Y_{P,H2O} im Permeat. | | | | |
| | | | | |

| Permeatdruck Pₚ = 0,1 (bar) | | | | |
|---|---|---|---|---|
| α | A_{erf} (m2) | Y_{P,H2O} (Vol%) | θ_{ges} (%) | θ_{Luft} (%) |
| | | | | |
| 100 | 16,00 | 12,30 | 5,03 | 4,44 |
| 500 | 46,40 | 19,44 | 3,17 | 2,57 |
| 1.000 | 83,20 | 21,13 | 2,92 | 2,32 |
| 5.000 | 377,60 | 22,80 | 2,70 | 2,10 |
| 10.000 | 744,80 | 23,04 | 2,68 | 2,08 |

| Permeatdruck Pₚ = 0,05 (bar) | | | | |
|---|---|---|---|---|
| α | A_{erf} (m2) | Y_{P,H2O} (Vol%) | θ_{ges} (%) | θ_{Luft} (%) |
| | | | | |
| 100 | 12,00 | 16,11 | 3,83 | 3,24 |
| 500 | 24,00 | 31,42 | 1,96 | 1,35 |
| 1.000 | 38,40 | 36,58 | 1,68 | 1,07 |
| 5.000 | 144,80 | 43,28 | 1,42 | 0,81 |
| 10.000 | 275,20 | 44,53 | 1,38 | 0,77 |

| Permeatdruck Pₚ = 0,033 (bar) | | | | |
|---|---|---|---|---|
| α | A_{erf} (m2) | Y_{P,H2O} (Vol%) | θ_{ges} (%) | θ_{Luft} (%) |
| 100 | 10,40 | 17,93 | 3,44 | 2,84 |
| 500 | 17,60 | 38,70 | 1,59 | 0,98 |
| 1.000 | 24,80 | 46,83 | 1,31 | 0,70 |
| 5.000 | 76,80 | 58,92 | 1,04 | 0,43 |
| 10.000 | 138,40 | 61,51 | 1,00 | 0,39 |

### Berechnungsgrundlage:

Luft-Wasserdampf-Gemisch
P_{F} = 8 bar
ℓ_{F} = 35° C
Y*_{F,H2O} = 0,7 Vol% ==> Y_{F,Luft} = 99,3 Vol%
G_{F} = 1.000 m_{N}³/h
Wasserdampf-Permeabilität L_{H2O} = 35 m_{N}³/(m² bar)
Ziel: Retentat-Taupunkt ℓ_{T,R} = + 2° C

| Zeichenerklärung: | | |
|---|---|---|
| | | |
| A_{erf} | erforderliche Membranfläche | (m²) |
| G_{F} | Feedvolumenstrom | (m_{N}³/h) |
| L_{H2O} | Wasserdampfpermeabilität | (m_{N}³/(m²h bar)) |
| P_{F} | Feeddruck | (bar) |
| Pₚ | Permeatdruck | (bar) |
| Y*_{F,H2O} | Konzentration des Wasserdampfs im Feed (Sättigungskonzentration bei P_{F} und ℓ_{F}) | (Vol%) |
| Y_{F,Luft} | Luftkonzentration im Feed | (Vol%) |
| Y_{P,H2O} | Wasserdampfkonzentration im Permeat | (Vol%) |
| α | Membranselektivität | (-) |
| θ_{ges} | Membranstufenschnitt | (%) |
| θ_{Luft} | Luft-Stufenschnitt | (%) |

Der Einsatz der vorbeschriebenen Anordnung 10 bringt eine Reihe von Vorteilen gegenüber den eingangs beschriebenen konventionellen Kühl- und Adsorptionsmethoden. Auf der Grundlage gleicher Trocknungsleistungen sind Anordnungen 10 gemäß der Erfindung deutlich kompakter als Kältetrocknungsanlagen. Neben einem geringeren Bauvolumen ist auch eine deutliche Gewichtsreduzierung (Fundamente) zu verzeichnen. Mit der erfindungsgemäßen Anordnung 10 entstehen vernachlässigbare Verluste an bereits komprimierter Druckluft, weil der durch die Membran tretende Permeatstrom bei Verwendung der vorbeschriebenen hochselektiven Membran in Verbindung mit einem angemessen hohen Druckverhältnis zu einem großen Teil aus Wasserdampf besteht. Beim Betrieb der erfindungsgemäßen Anordnung 10 werden keine problematischen Hilfsstoffe wie zum Beispiel die bei Kältetrocknern erforderlichen Kältemittel (Ozonkiller) benötigt. Vielmehr wird lediglich Wasser als Betriebsflüssigkeit für die Flüssigkeitsring-Vakuumpumpe 16 und ein Elektroanschluß benötigt. Die erfindungsgemäße Anordnung 10 hat keine physikalischen Grenzen bezüglich des einzustellenden Drucktaupunktes, d.h., es können beliebige Drucktaupunkte ober- und unterhalb von 0° C realisiert werden. In der hochdruckseitigen Trocknungsstrecke kann prinzipiell kein Kondensat anfallen. Die Kondensation der in das Permeat ausgetragenen Feuchte erfolgt vielmehr in der permeatseitig angeordneten Flüssigkeitsring-Vakuumpumpe 16 und führt zu einer verbesserten Pumpenleistung mit der entsprechend positiven Auswirkung auf die Gesamtfunktion bzw. den Gesamtprozeß beim Betrieb der Anordnung 10. Die hohen Lärmemissionen, die sowohl bei Adsorption (Entspannung des zu desorbierenden Behälters) als auch bei den Kältetrocknern (Kompressor der Kältemaschine) auftreten, reduzieren sich bei der Kombination der Membran/ Flüssigkeitsringpumpe auf das unproblematische Betriebsgeräusch der Pumpeneinrichtung 16. Die bisherige Erfahrung mit der Anordnung 10 hat gezeigt, daß derartige Anlagen wenig störanfällig sind und Wartungskosten entsprechend gering sind.

### Bezugszeichenliste

- 10: Anordnung
- 11: Gas-Dampf-Gemisch
- 12: Trenneinrichtung/Membrantrenneinrichtung
- 13: dampfabgereicherter Strom (Retentat)
- 14: dampfangereicherter Strom (Permeat)
- 15: Eingang Trenneinrichtung
- 16: Pumpeneinrichtung
- 17: Wasserabscheider
- 18: Kühleinrichtung
- 19: Abscheider
- 20: Wasser
- 200: Wasser
- 21: Kühleinrichtung

## Patentansprüche

1. Anordnung (10) zur Entfernung von Wasserdampf aus unter Druck befindlichen, Kohlenwasserstoff enthaltenden Gasen oder Gasgemischen, wobei das unter Druck befindliche Gas-Dampf-Gemisch (11) eingangsseitig auf eine Membrantrenneinrichtung (12) geleitet wird, in der es retentatseitig in einen dampfabgereicherten Gasstrom (13) und permeatseitig in einen dampfangereicherten Gasstrom (14) getrennt wird, und daß permeatseitig mittels einer Pumpeneinrichtung (16) ein Vakuum erzeugbar ist, und wobei die in der Membrantrenneinrichtung (12) verwendeten Membranen eine Selektivität α im Bereich von 100 bis 10.000 aufweisen.

2. Anordnung nach Anspruch 1, **dadurch gekennzeichnet, daß** die Pumpeneinrichtung (16) als Kondensator des Permeats nutzbar ist.

3. Anordnung nach einem oder beiden der Ansprüche 1 oder 2, **dadurch gekennzeichnet, daß** die Membrantrenneinrichtung (12) im Kreuzstrommodus betreibbar ist.

4. Anordnung nach einem oder beiden der Ansprüche 1 oder 3, **dadurch gekennzeichnet, daß** die Membrantrenneinrichtung (12) im Gegenstrom betreibbar ist.

5. Anordnung nach einem oder mehreren der Ansprüche 1 bis 4, **dadurch gekennzeichnet, daß** die in der Membrantrenneinrichtung (12) verwendbaren Membranen auf Celluloseether-Basis ausgebildet sind.

6. Anordnung nach einem oder mehreren der Ansprüche 1 bis 5, **dadurch gekennzeichnet, daß** die Pumpeneinrichtung (16) eine Flüssigkeitsring-Vakuumpumpe ist.

7. Anordnung nach Anspruch 6, **dadurch gekennzeichnet, daß** die Pumpeneinrichtung (16) durch einen Dampfstrahler gebildet wird.

8. Anordnung nach einem oder mehreren der Ansprüche 1 bis 6, **dadurch gekennzeichnet, daß** die Pumpeneinrichtung (16) durch eine Kombination aus einer Flüssigkeitsring-Vakuumpumpe und einem Dampfstrahler gebildet wird.

9. Anordnung nach einem oder mehreren der Ansprüche 1 bis 8, **dadurch gekennzeichnet, daß** ein hohes transmembranes Druckverhältnis 0 durch geeignete Wahl der Pumpeneinrichtung (16) einstellbar ist.

10. Anordnung nach einem oder mehreren der Ansprüche 1 bis 9, **dadurch gekennzeichnet, daß** der Pumpeneinrichtung (16) nachgeschaltet ein Wasserabscheider (17) angeordnet ist.

11. Anordnung nach einem oder mehreren der Ansprüche 1 bis 10, **dadurch gekennzeichnet, daß** das zu trennende Gas-Dampf-Gemisch (11) vor Eintritt in die Membrantrenneinrichtung (12) über eine Kühleinrichtung (18) führbar ist.

12. Anordnung nach Anspruch 11, **dadurch gekennzeichnet, daß** zwischen Kühleinrichtung (18) und Membrantrenneinrichtung (12) ein Abscheider (19) angeordnet ist.

13. Anordnung nach einem oder mehreren der Ansprüche 9 bis 12, **dadurch gekennzeichnet, daß** das aus dem Wasserabscheider (17) austretende Wasser (20) als Kühlwasser der Kühleinrichtung (18) zuführbar ist.

14. Anordnung nach Anspruch 13, **dadurch gekennzeichnet, daß** das die Kühleinrichtung (18) verlassende Wasser (200) als Betriebsflüssigkeit der als Flüssigkeitsring-Vakuumpumpe ausgebildeten Pumpeinrichtung (16) zuführbar ist.

15. Anordnung nach Anspruch 14, **dadurch gekennzeichnet, daß** das die Kühleinrichtung (18) verlassende Wasser (200), bevor es als Betriebsflüssigkeit der als Flüssigkeitsring-Vakuumpumpe ausgebildeten Pumpeneinrichtung (16) zuführbar ist, zu seiner Kühlung über eine Kühleinrichtung (21) führbar ist.

## Claims

1. An arrangement (10) for removing water vapour from gases or mixtures of gases under pressure containing hydrocarbons, the gas/vapour mixture (11) under pressure being fed on the input side to a membrane separating device (12) in which it is separated into a vapour-depleted gas flow (13) on the retentate side and a vapour-enriched gas flow (14) on the permeate side, and that it is possible to generate a vacuum on the permeate side by means of a pumping device (16), and the membranes used in the membrane separating device (12) having a selectivity ▼ ranging from 100 to 10,000.

2. An arrangement in accordance with claim 1,
**characterised in that** the pumping device (16) can be used as the permeate condenser.

3. An arrangement in accordance with one or both of claims 1 and/or 2,
**characterised in that** the membrane separating device (12) can be operated in cross flow mode.

4. An arrangement in accordance with one or both of claims 1 and/or 3,
**characterised in that** the membrane separating device (12) can be operated in counter flow mode.

5. An arrangement in accordance with one or more of claims 1 to 4,
**characterised in that** the membranes which can be used in the membrane separating device (12) are based on cellulose ether.

6. An arrangement in accordance with one or more of claims 1 to 5,
**characterised in that** the pumping device (16) is a liquid ring vacuum pump.

7. An arrangement in accordance with claim 6,
**characterised in that** the pumping device (16) takes the form of a vapour pump.

8. An arrangement in accordance with one or more of claims 1 to 6,
**characterised in that** the pumping device (16) takes the form of a combination of a liquid ring vacuum pump and a vapour pump.

9. An arrangement in accordance with one or more of claims 1 to 8,
**characterised in that** it is possible to set a high trans-membrane pressure ratio ∅ by selecting the appropriate pumping device (16).

10. An arrangement in accordance with one or more of claims 1 to 9,
**characterised in that** a water separator is positioned downstream of the pumping device (16).

11. An arrangement in accordance with one or more of claims 1 to 10,
**characterised in that** the gas/vapour mixture (11) to be separated can be fed through a cooling device (18) before entering the membrane separating device (12).

12. An arrangement in accordance with claim 11,
**characterised in that** a separator (19) is positioned between the cooling device (18) and the membrane separating device (12).

13. An arrangement in accordance with one or more of claims 9 to 12,
**characterised in that** the water (20) leaving the water separator (17) can be fed to the cooling device (18) as cooling water.

14. An arrangement in accordance with claim 13,
**characterised in that** the water (200) leaving the cooling device (18) can be fed to the pumping device (16) in the form of a liquid ring vacuum pump as the operating medium.

15. An arrangement in accordance with claim 14,
**characterised in that** before it can be fed to the pumping device (16) in the form of a liquid ring vacuum pump as the operating medium, the water (200) leaving the cooling device (18) can be fed through a cooling device (21) to cool it.

## Revendications

1. Aménagement (10) pour l'élimination de vapeur d'eau dans des gaz ou des mélanges gazeux sous pression contenant des hydrocarbures, le mélange gaz-vapeur (11) sous pression étant conduit du côté de l'entrée d'un dispositif de cloisons membraneuses (12), dans lequel on sépare en un courant gazeux appauvri en vapeur (13) du côté du rétentat et en un courant gazeux enrichi en vapeur (14) du côté du perméat, et un vide pouvant être produit du côté du perméat au moyen d'un dispositif de pompage (16), et les membranes utilisées dans le dispositif de cloisons membraneuses (12) comportant une sélectivité α de l'ordre de 100 à 10 000.

2. Aménagement selon la revendication 1, **caractérisé en ce que** le dispositif de pompage (15) est utilisable comme condensateur du perméat.

3. Aménagement selon la revendication 1 ou 2 ou les deux, **caractérisé en ce que** le dispositif de cloisons membraneuses (12) est utilisable en mode d'écoulements croisés.

4. Aménagement selon la revendication 1 ou 3 ou les deux, **caractérisé en ce que** le dispositif de cloisons membraneuses (12) peut fonctionner à contre-courant.

5. Aménagement selon une ou plusieurs des revendications 1 à 4, **caractérisé en ce que** les membranes utilisées dans le dispositif de cloisons membraneuses (12) sont conçues à base d'éther de cellulose.

6. Aménagement selon une ou plusieurs des revendications 1 à 5, **caractérisé en ce que** le dispositif de pompage (16) est une pompe à vide à circuit hydraulique.

7. Aménagement selon la revendication 6, **caractérisé en ce que** le dispositif de pompage (16) est constitue d'un émetteur de vapeur.

8. Aménagement selon une ou plusieurs des revendications 1 à 6, **caractérisé en ce que** le dispositif de pompage (16) est constitué d'une combinaison d'une pompe à vide à circuit hydraulique et d'un émetteur de vapeur.

9. Aménagement selon une ou plusieurs des revendications 1 à 8, **caractérisé en ce que** l'on peut régler un haut rapport de pression transmembranaire ∅ par le choix approprié du dispositif de pompage (16).

10. Aménagement selon une ou plusieurs des revendications 1 à 9, **caractérisé en ce qu'**un séparateur d'eau (17) est disposé de manière intercalée à la suite du dispositif de pompage (16).

11. Aménagement selon une ou plusieurs des revendications 1 à 10, **caractérisé en ce que** le mélange gaz-vapeur (11) à séparer peut être amené avant l'entrée dans le dispositif de cloisons membraneuses (12) au moyen d'un dispositif de refroidissement (18).

12. Aménagement selon la revendication 11, **caractérisé en ce qu'**entre le dispositif de refroidissement (18) et le dispositif de cloisons membraneuses (12) est disposé un séparateur (19).

13. Aménagement selon une ou plusieurs des revendications 9 à 12, **caractérisé en ce que** l'eau (20) extraite du séparateur d'eau (17) peut être admise comme liquide de refroidissement du dispositif de refroidissement (18).

14. Aménagement selon la revendication 13, **caractérisé en ce que** l'eau (200) quittant le dispositif de refroidissement (18) peut être admise comme liquide de fonctionnement du dispositif de pompage (16) conçu telle une pompe à vide à circuit hydraulique.

15. Aménagement selon la revendication 14, **caractérisé en ce que** l'eau (200) quittant le dispositif de refroidissement (18), avant de pouvoir être admise comme liquide de fonctionnement du dispositif de pompage (16) conçu telle une pompe à vide à circuit hydraulique, peut être refroidie au moyen d'un dispositif de refroidissement (21).
